# FASCICULE DE BREVET EUROPEEN

(11) **EP 3 705 320 B1**
(45) Date de publication et mention de la délivrance du brevet: **21.12.2022**
(21) Numéro de dépôt: 20159384.5
(22) Date de dépôt: 25.02.2020
(51) Int. Cl.: B60G 11/00, B60G 13/00

(54) **PROCÉDÉ D'OPTIMISATION D'UNE SUSPENSION D'UN TRAIN ARRIÈRE D'UN VÉHICULE DE TYPE AMBULANCE OU DE TYPE TRANSPORT DE PERSONNES À MOBILITÉ RÉDUITE**
OPTIMIERUNGSVERFAHREN EINER AUFHÄNGUNG EINER HINTERACHSE EINES FAHRZEUGS VOM TYP KRANKENWAGEN ODER TRANSPORTFAHRZEUG FÜR PERSONEN MIT EINGESCHRÄNKTER MOBILITÄT
METHOD FOR OPTIMISING A SUSPENSION OF A REAR END OF A VEHICLE SUCH AS AN AMBULANCE OR TRANSPORT FOR PERSONS WITH REDUCED MOBILITY

(30) Priorité: 08.03.2019 FR 1902396
(43) Date de publication de la demande: 09.09.2020
(73) Titulaire: JSA, 26320 Saint-Marcel-lès-Valence (FR)
(72) Inventeur: CHABERT, Alexis, 26500 BOURG LÈS VALENCE (FR); VIOUGEAS, Vincent, 26600 LA ROCHE DE GLUN (FR); LEJEUNE, Gaël, 26300 BARBIÈRES (FR)
(74) Mandataire: INNOV-GROUP

(56) Documents cités:
- DE-C1- 19 820 277

## Description

### Domaine technique

L'invention se rapporte au domaine technique des suspensions de véhicule, plus précisément dans l'optimisation d'une suspension d'un train arrière d'un véhicule de type ambulance ou de type transport de personnes à mobilité réduite (TPMR).

### État de l'art

Une suspension d'un train arrière d'un véhicule, connue de l'état de la technique, comporte :
- deux ressorts d'origine ;
- deux amortisseurs d'origine.

Le rôle des ressorts est de maintenir la charge suspendue du véhicule de manière flexible. Le rôle des amortisseurs est d'absorber l'énergie emmagasinée puis restituée par les ressorts. Les amortisseurs permettent d'éviter les oscillations du véhicule lorsque celui-ci passe sur un dos d'âne par exemple.

Les deux ressorts d'origine et les deux amortisseurs d'origine d'une suspension d'un train arrière d'un véhicule utilitaire sont réglés de manière identique, quelle que soit l'utilisation finale du véhicule utilitaire. Or, un véhicule de type ambulance ou de type TPMR possède des caractéristiques spécifiques. En particulier, un tel véhicule doit transporter des personnes blessées, malades ou handicapées dans des conditions de confort accrues par rapport à un véhicule utilitaire classique. La suspension d'origine du train arrière d'un véhicule utilitaire classique, de par sa conception généraliste, ne permet pas de répondre à de tels besoins.

Le document DE19820277 divulgue une suspension comprenant un système d'amortissement actif, spécifiquement adapté pour des ambulances, correspondant au préambule de la revendication 1.

### Exposé de l'invention

L'invention vise à remédier en tout ou partie aux inconvénients précités. A cet effet, l'invention a pour objet un procédé d'optimisation d'une suspension d'un train arrière d'un véhicule de type ambulance ou de type transport de personnes à mobilité réduite, la suspension comprenant :
- deux ressorts d'origine, possédant chacun une raideur d'origine et une flèche d'origine ;
- deux amortisseurs d'origine, possédant chacun :
   une force de détente d'origine à basse vitesse, pour une vitesse de débattement de l'amortisseur d'origine inférieure à 0,1 m.s⁻¹,
   une force de compression d'origine à basse vitesse, pour une vitesse de débattement de l'amortisseur d'origine inférieure à 0,1 m.s⁻¹,
   le procédé comportant les étapes :
      a) remplacer les deux ressorts d'origine par deux ressorts dédiés, possédant chacun une raideur strictement inférieure à la raideur d'origine et une flèche strictement supérieure à la flèche d'origine ;
      b) remplacer les deux amortisseurs d'origine par deux amortisseurs dédiés, possédant chacun :
- une force de détente à basse vitesse, pour une vitesse de débattement de l'amortisseur dédié inférieure à 0,1 m.s⁻¹, strictement inférieure à la force de détente d'origine à basse vitesse ;
- une force de compression à basse vitesse, pour une vitesse de débattement de l'amortisseur dédié inférieure à 0,1 m.s⁻¹, strictement supérieure à la force de compression d'origine à basse vitesse.

Ainsi, un tel procédé selon l'invention permet d'améliorer les conditions de confort du véhicule, en particulier le ressenti de conduite, la tenue de route, et la réactivité sur les petits défauts de la route grâce à de tels amortisseurs dédiés, les deux ressorts dédiés permettant de maintenir l'assiette du véhicule et d'améliorer la réactivité de la suspension.

### Définitions

- Par «optimisation », on entend le fait de donner de meilleures conditions d'utilisation en termes de confort de conduite et de confort pour les passagers du véhicule.
- Par « train arrière », on entend l'ensemble des organes mécaniques situés dans la partie arrière du véhicule, principalement les roues arrières, les moyeux, les freins arrières, l'essieu arrière (si le train arrière n'est pas à roues indépendantes), la suspension arrière, la barre stabilisatrice etc. Le châssis ne fait pas partie du train arrière du véhicule.
- Par « basse vitesse », on entend une vitesse de débattement de l'amortisseur dédié inférieure ou égale à 0,1 m.s⁻¹.
- Par « flèche », on entend la flèche à vide (i.e. en l'absence de charge) du ressort dédié.
- Par « flèche d'origine », on entend la flèche à vide (i.e. en l'absence de charge) d'origine du ressort d'origine.

Le procédé selon l'invention peut comporter une ou plusieurs des caractéristiques suivantes.

Selon une caractéristique de l'invention, chaque amortisseur d'origine possède :
- une force de détente d'origine à haute vitesse, pour une vitesse de débattement de l'amortisseur d'origine supérieure à 0,4 m.s⁻¹;
- une force de compression d'origine à haute vitesse, pour une vitesse de débattement de l'amortisseur d'origine supérieure à 0,4 m.s⁻¹;
et l'étape b) est exécutée de sorte que chaque amortisseur dédié possède :
- une force de détente à haute vitesse, pour une vitesse de débattement de l'amortisseur dédié supérieure à 0,4 m.s⁻¹, strictement inférieure à la force de détente d'origine à haute vitesse ;
- une force de compression à haute vitesse, pour une vitesse de débattement de l'amortisseur dédié supérieure à 0,4 m.s⁻¹, strictement supérieure à la force de compression d'origine à haute vitesse.

Par « haute vitesse », on entend une vitesse de débattement de l'amortisseur dédié supérieure ou égale à 0,4 m.s⁻¹.

Ainsi, un avantage procuré par de tels tarages est d'améliorer les conditions de confort du véhicule lorsque la route présente de gros défauts, par exemple des dos d'âne ou des nids de poule.

Selon une caractéristique de l'invention, l'étape b) est exécutée de sorte que :
- la force de détente à haute vitesse de chaque amortisseur dédié est comprise entre 40% et 60%, de préférence comprise entre 45% et 55%, de la force de détente d'origine à haute vitesse ;
- la force de compression à haute vitesse de chaque amortisseur dédié est comprise entre 180% et 220%, de préférence comprise entre 190% et 210%, de la force de compression d'origine à haute vitesse.

Ainsi, un avantage procuré par de tels tarages est d'améliorer les conditions de confort du véhicule lorsque la route présente de gros défauts, par exemple des dos d'âne ou des nids de poule, sans nuire au dynamisme du véhicule.

Selon une caractéristique de l'invention, la force de détente d'origine à haute vitesse est comprise entre 1300 N et 1400 N, la force de compression d'origine à haute vitesse est comprise entre 140 N et 160 N ; et l'étape b) est exécutée de sorte que :
- la force de détente à haute vitesse de chaque amortisseur dédié est comprise entre 520 N et 840 N, de préférence comprise entre 585 N et 770 N ;
- la force de compression à haute vitesse de chaque amortisseur dédié est comprise entre 252 N et 352 N, de préférence comprise entre 266 N et 336 N.

Ainsi, un avantage procuré par de tels tarages est d'améliorer les conditions de confort du véhicule lorsque la route présente de gros défauts, par exemple des dos d'âne ou des nids de poule, sans nuire au dynamisme du véhicule.

Selon une caractéristique de l'invention, l'étape b) est exécutée de sorte que :
- la force de détente à basse vitesse de chaque amortisseur dédié est comprise entre 20% et 40%, de préférence comprise entre 25% et 35%, de la force de détente d'origine à basse vitesse ;
- la force de compression à basse vitesse de chaque amortisseur dédié est comprise entre 120% et 160%, de préférence comprise entre 130% et 150%, de la force de compression d'origine à basse vitesse.

Ainsi, un avantage procuré par de tels tarages est d'améliorer les conditions de confort du véhicule en particulier le ressenti de conduite, la tenue de route, et la réactivité sur les petits défauts de la route, sans nuire au dynamisme du véhicule.

Selon une caractéristique de l'invention, la force de détente d'origine à basse vitesse est comprise entre 900 N et 1100 N, la force de compression d'origine à basse vitesse est comprise entre 90 N et 110 N ; et l'étape b) est exécutée de sorte que :
- la force de détente à basse vitesse de chaque amortisseur dédié est comprise entre 180 N et 440 N, de préférence comprise entre 225 N et 385 N ;
- la force de compression à basse vitesse de chaque amortisseur dédié est comprise entre 108 N et 176 N, de préférence comprise entre 117 N et 165 N.

Ainsi, un avantage procuré par de tels tarages est d'améliorer les conditions de confort du véhicule en particulier le ressenti de conduite, la tenue de route, et la réactivité sur les petits défauts de la route, et ce sans nuire au dynamisme du véhicule.

Selon une caractéristique de l'invention, l'étape a) est exécutée de sorte que la raideur de chaque ressort dédié est comprise entre 60% et 80% de la raideur d'origine.

Ainsi, un avantage procuré est d'améliorer la filtration des défauts routiers en augmentant la réactivité de la suspension.

Selon une caractéristique de l'invention, la raideur d'origine est comprise entre 90 N/m et 100 N/m, et l'étape a) est exécutée de sorte que la raideur de chaque ressort dédié est comprise entre 54 N/m et 80 N/m, de préférence comprise entre 63 N/m et 70 N/m.

Ainsi, un avantage procuré est d'améliorer la filtration des défauts routiers en augmentant la réactivité de la suspension.

Selon une caractéristique de l'invention, l'étape a) est exécutée de sorte que la flèche de chaque ressort dédié est comprise entre 106% et 147% de la flèche d'origine.

Ainsi, un avantage procuré est de conserver une assiette satisfaisante du véhicule malgré des charges différentes pouvant être transportées par le véhicule.

Selon une caractéristique de l'invention, le véhicule possède une masse en charge maximale d'utilisation mesurée sous les roues du train arrière comprise entre 1300 kg et 1500 kg, la flèche d'origine est comprise entre 150 mm et 160 mm, et l'étape a) est exécutée de sorte que la flèche de chaque ressort dédié est comprise entre 170 mm et 190 mm.

Ainsi, un avantage procuré est de conserver une assiette satisfaisante du véhicule lorsque la masse du véhicule en charge maximale d'utilisation, mesurée sous les roues du train arrière, est comprise entre 1300 kg et 1500 kg.

Selon une caractéristique de l'invention, le véhicule possède une masse en charge maximale d'utilisation mesurée sous les roues du train arrière comprise entre 1700 kg et 1800 kg, la flèche d'origine est comprise entre 150 mm et 160 mm, et l'étape a) est exécutée de sorte que la flèche de chaque ressort dédié est comprise entre 190 mm et 210 mm.

Ainsi, un avantage procuré est de conserver une assiette satisfaisante du véhicule lorsque la masse du véhicule en charge maximale d'utilisation, mesurée sous les roues du train arrière, est comprise entre 1700 kg et 1800 kg.

Selon une caractéristique de l'invention, le véhicule possède une masse en charge maximale d'utilisation mesurée sous les roues du train arrière comprise entre 1800 kg et 2100 kg, la flèche d'origine est comprise entre 150 mm et 160 mm, et l'étape a) est exécutée de sorte que la flèche de chaque ressort dédié est comprise entre 200 mm et 220 mm.

Ainsi, un avantage procuré est de conserver une assiette satisfaisante du véhicule lorsque la masse du véhicule en charge maximale d'utilisation, mesurée sous les roues du train arrière, est comprise entre 1800 kg et 2100 kg.

Selon une caractéristique de l'invention, chaque ressort d'origine est de type monolame, et l'étape a) est exécutée de sorte que chaque ressort dédié est de type bilame.

Ainsi, un avantage procuré est de diviser la charge totale sur plusieurs lames afin de réduire les contraintes s'exerçant dans les lames.

Selon une caractéristique de l'invention, chaque amortisseur d'origine est de type bitube, et l'étape b) est exécutée de sorte que chaque amortisseur dédié est de type monotube à gaz.

Ainsi, un avantage procuré est d'améliorer la réactivité des amortisseurs et donc la tenue de route, le confort de conduite ainsi que le confort pour les passagers du véhicule (meilleure absorption des petits défauts de la route).

Selon une caractéristique de l'invention, la flèche des ressorts dédiés définit un point haut et un point bas de la suspension du train arrière du véhicule ; et l'étape b) est exécutée de sorte que chaque amortisseur dédié possède un entraxe ouvert, adapté à la flèche des ressorts dédiés, de sorte que l'amortisseur dédié peut se comprimer librement au point haut et peut se détendre librement au point bas.

Ainsi, un avantage procuré est de ne pas limiter le débattement de l'ensemble de la suspension du train arrière.

L'invention a également pour objet une suspension d'un train arrière d'un véhicule de type ambulance ou de type transport de personnes à mobilité réduite, obtenue par un procédé conforme à l'invention.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est une vue schématique partielle en perspective d'un train arrière d'un véhicule comportant une suspension obtenue par un procédé selon l'invention, le train arrière étant relié au châssis du véhicule notamment par l'intermédiaire des ressorts (de type monolame) et des amortisseurs.
Figure 2 est une vue schématique partielle en perspective d'un train arrière d'un véhicule comportant une suspension obtenue par un procédé selon l'invention, le train arrière étant relié au châssis du véhicule notamment par l'intermédiaire des ressorts (de type bilame) et des amortisseurs.
Figure 3 est une vue schématique de côté d'un exemple de ressort dédié (monolame) utilisé dans un procédé selon l'invention.
Figure 4 est une vue schématique de côté d'un exemple de ressort dédié (bilame) utilisé dans un procédé selon l'invention.
Figure 5 est un accélérogramme représentant en abscisses le temps (en secondes) et en ordonnées l'accélération (en g) mesurée à l'arrière d'un véhicule grâce à des capteurs de chocs. La courbe A est l'accélération mesurée pour une suspension d'origine. La courbe B est l'accélération mesurée pour une suspension optimisée par un procédé selon l'invention.

### Exposé détaillé des modes de réalisation

Les éléments identiques ou assurant la même fonction porteront les mêmes références pour les différents modes de réalisation, par souci de simplification.

Un objet de l'invention est un procédé d'optimisation d'une suspension d'un train arrière 1 d'un véhicule de type ambulance ou de type transport de personnes à mobilité réduite, la suspension comprenant :
- deux ressorts d'origine, possédant chacun une raideur d'origine et une flèche d'origine ;
- deux amortisseurs d'origine, possédant chacun :
   une force de détente d'origine à basse vitesse, pour une vitesse de débattement de l'amortisseur d'origine inférieure à 0,1 m.s⁻¹,
   une force de compression d'origine à basse vitesse, pour une vitesse de débattement de l'amortisseur d'origine inférieure à 0,1 m.s⁻¹,
   le procédé comportant les étapes :
      a) remplacer les deux ressorts d'origine par deux ressorts dédiés 2, possédant chacun une raideur strictement inférieure à la raideur d'origine et une flèche F strictement supérieure à la flèche d'origine ;
      b) remplacer les deux amortisseurs d'origine par deux amortisseurs dédiés 3, possédant chacun :
- une force de détente à basse vitesse, pour une vitesse de débattement de l'amortisseur dédié 3 inférieure à 0,1 m.s⁻¹, strictement inférieure à la force de détente d'origine à basse vitesse ;
- une force de compression à basse vitesse, pour une vitesse de débattement de l'amortisseur dédié 3 inférieure à 0,1 m.s⁻¹, strictement supérieure à la force de compression d'origine à basse vitesse.

### Etape a)

Les ressorts dédiés 2 peuvent être montés lors de l'étape a) sur un essieu 5 arrière. Lorsque le train arrière 1 du véhicule ne comporte pas d'essieu 5 arrière (e.g. une suspension de type MacPherson), les ressorts dédiés 2 peuvent être montés sur une jambe de force, la jambe de force étant fixée à un porte-fusée. Les ressorts dédiés 2 sont montés lors de l'étape a) sur le châssis 6 du véhicule.

L'étape a) est avantageusement exécutée de sorte que la raideur de chaque ressort dédié 2 est comprise entre 60% et 80% de la raideur d'origine. La raideur d'origine peut être comprise entre 90 N/m et 100 N/m, et l'étape a) est avantageusement exécutée de sorte que la raideur de chaque ressort dédié 2 est comprise entre 54 N/m et 80 N/m, de préférence comprise entre 63 N/m et 70 N/m.

L'étape a) est avantageusement exécutée de sorte que la flèche F de chaque ressort dédié 2 est comprise entre 106% et 147% de la flèche d'origine.

Lorsque le véhicule possède une masse en charge maximale d'utilisation mesurée sous les roues du train arrière 1 comprise entre 1300 kg et 1500 kg, la flèche d'origine peut être comprise entre 150 mm et 160 mm, et l'étape a) est avantageusement exécutée de sorte que la flèche F de chaque ressort dédié 2 est comprise entre 170 mm et 190 mm. Une telle flèche F de chaque ressort dédié 2 permet d'adapter l'assiette du véhicule selon son utilisation finale. La caisse du véhicule ne sera ni trop haute à vide, ni trop basse une fois chargée.

Lorsque le véhicule possède une masse en charge maximale d'utilisation mesurée sous les roues du train arrière 1 comprise entre 1700 kg et 1800 kg, la flèche d'origine peut être comprise entre 150 mm et 160 mm, et l'étape a) est avantageusement exécutée de sorte que la flèche F de chaque ressort dédié 2 est comprise entre 190 mm et 210 mm. Une telle flèche F de chaque ressort dédié 2 permet d'adapter l'assiette du véhicule selon son utilisation finale. La caisse du véhicule ne sera ni trop haute à vide, ni trop basse une fois chargée.

Lorsque le véhicule possède une masse en charge maximale d'utilisation mesurée sous les roues du train arrière 1 comprise entre 1800 kg et 2100 kg, la flèche d'origine peut être comprise entre 150 mm et 160 mm, et l'étape a) est avantageusement exécutée de sorte que la flèche F de chaque ressort dédié 2 est comprise entre 200 mm et 220 mm. Une telle flèche F de chaque ressort dédié 2 permet d'adapter l'assiette du véhicule selon son utilisation finale. La caisse du véhicule ne sera ni trop haute à vide, ni trop basse une fois chargée.

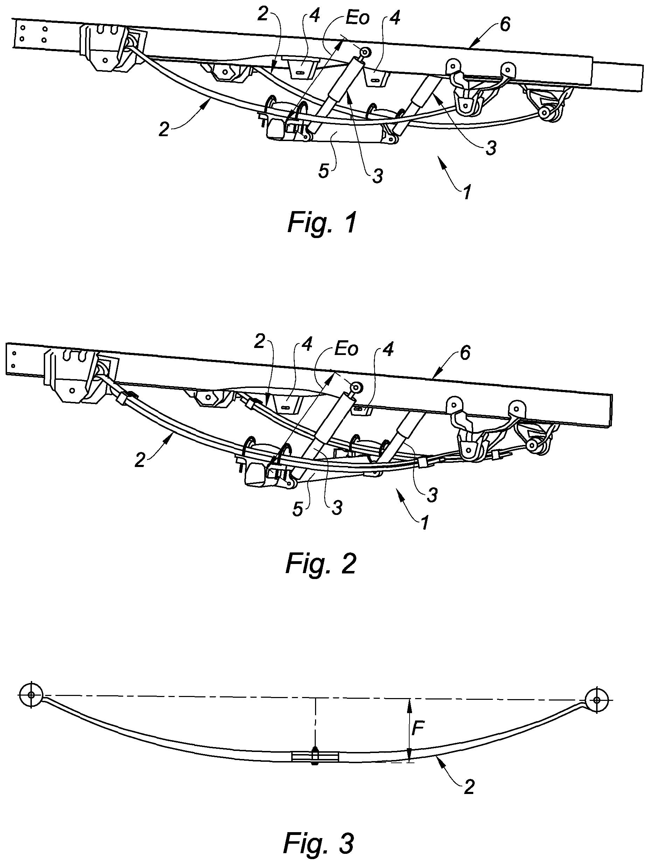

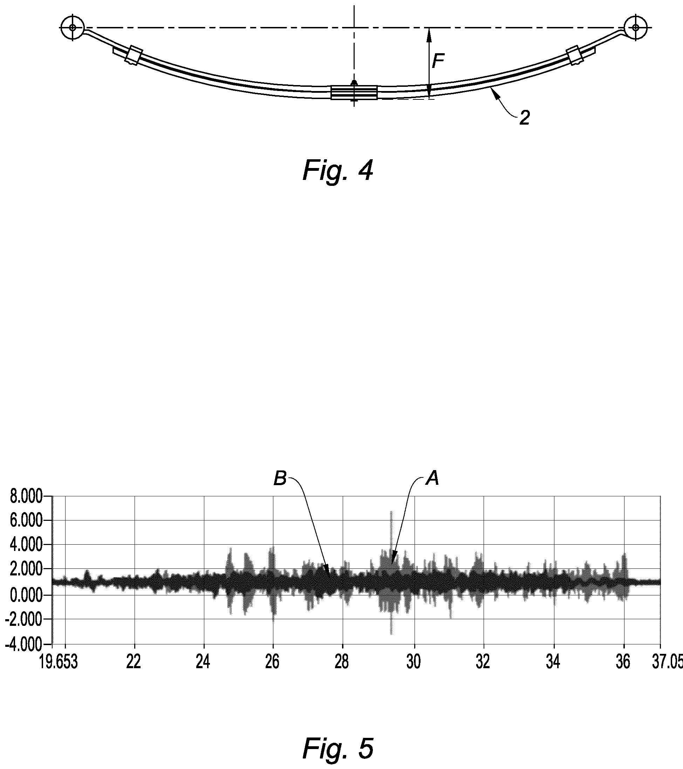

Chaque ressort d'origine peut être de type monolame, et l'étape a) est avantageusement exécutée de sorte que chaque ressort dédié 2 est de type bilame, comme illustré aux figures 2 et 4. Cependant, comme illustré aux figures 1 et 3, chaque ressort dédié 2 peut être de type monolame. Par ailleurs, chaque ressort dédié 2 peut également être un ressort à spirales (hélicoïdal).

La flèche F des ressorts dédiés 2 définit un point haut et un point bas de la suspension du train arrière 1 du véhicule. Le point haut peut être défini par une butée de chocs 4, montée sur le châssis 6 du véhicule (cf. paragraphe intitulé « Suspension arrière obtenue » ci-après).

### Etape b)

Les amortisseurs dédiés 3 peuvent être montés lors de l'étape b) sur un essieu 5 arrière. Lorsque le train arrière 1 du véhicule ne comporte pas d'essieu 5 arrière (e.g. une suspension de type MacPherson), les amortisseurs dédiés 3 peuvent être montés sur une jambe de force, la jambe de force étant fixée à un porte-fusée. Les amortisseurs dédiés 3 sont montés lors de l'étape b) sur le châssis 6 du véhicule.

L'étape b) est avantageusement exécutée de sorte que :
- la force de détente à basse vitesse de chaque amortisseur dédié 3 est comprise entre 20% et 40%, de préférence comprise entre 25% et 35%, de la force de détente d'origine à basse vitesse ;
- la force de compression à basse vitesse de chaque amortisseur dédié 3 est comprise entre 120% et 160%, de préférence comprise entre 130% et 150%, de la force de compression d'origine à basse vitesse.

La force de détente d'origine à basse vitesse peut être comprise entre 900 N et 1100 N, la force de compression d'origine à basse vitesse peut être comprise entre 90 N et 110 N ; et l'étape b) est avantageusement exécutée de sorte que :
- la force de détente à basse vitesse de chaque amortisseur dédié 3 est comprise entre 180 N et 440 N, de préférence comprise entre 225 N et 385 N ;
- la force de compression à basse vitesse de chaque amortisseur dédié 3 est comprise entre 108 N et 176 N, de préférence comprise entre 117 N et 165 N.

Chaque amortisseur d'origine possède :
- une force de détente d'origine à haute vitesse, pour une vitesse de débattement de l'amortisseur d'origine supérieure à 0,4 m.s⁻¹;
- une force de compression d'origine à haute vitesse, pour une vitesse de débattement de l'amortisseur d'origine supérieure à 0,4 m.s⁻¹.

L'étape b) est avantageusement exécutée de sorte que chaque amortisseur dédié 3 possède :
- une force de détente à haute vitesse, pour une vitesse de débattement de l'amortisseur dédié 3 supérieure à 0,4 m.s⁻¹, strictement inférieure à la force de détente d'origine à haute vitesse ;
- une force de compression à haute vitesse, pour une vitesse de débattement de l'amortisseur dédié 3 supérieure à 0,4 m.s⁻¹, strictement supérieure à la force de compression d'origine à haute vitesse.

L'étape b) est avantageusement exécutée de sorte que :
- la force de détente à haute vitesse de chaque amortisseur dédié 3 est comprise entre 40% et 60%, de préférence comprise entre 45% et 55%, de la force de détente d'origine à haute vitesse ;
- la force de compression à haute vitesse de chaque amortisseur dédié 3 est comprise entre 180% et 220%, de préférence comprise entre 190% et 210%, de la force de compression d'origine à haute vitesse.

La force de détente d'origine à haute vitesse peut être comprise entre 1300 N et 1400 N, la force de compression d'origine à haute vitesse peut être comprise entre 140 N et 160 N ; et l'étape b) est avantageusement exécutée de sorte que :
- la force de détente à haute vitesse de chaque amortisseur dédié 3 est comprise entre 520 N et 840 N, de préférence comprise entre 585 N et 770 N ;
- la force de compression à haute vitesse de chaque amortisseur dédié 3 est comprise entre 252 N et 352 N, de préférence comprise entre 266 N et 336 N.

L'étape b) est avantageusement exécutée de sorte que chaque amortisseur dédié 3 possède un entraxe ouvert EO, adapté à la flèche F des ressorts dédiés 2, de sorte que l'amortisseur dédié 3 peut se comprimer librement au point haut et peut se détendre librement au point bas. A titre d'exemples non limitatifs, l'entraxe ouvert EO de chaque amortisseur d'origine peut être compris entre 440 mm et 480 mm, et l'entraxe ouvert EO de chaque amortisseur dédié 3 peut être compris entre 470 mm et 510 mm. A titre d'exemples non limitatifs, l'entraxe fermé de chaque amortisseur d'origine peut être compris entre 300 mm et 320 mm, et l'entraxe fermé de chaque amortisseur dédié 3 peut être compris entre 310 mm et 330 mm.

Chaque amortisseur d'origine peut être de type bitube, et l'étape b) est avantageusement exécutée de sorte que chaque amortisseur dédié 3 est de type monotube à gaz. Le gaz utilisé est préférentiellement l'azote. Chaque amortisseur dédié 3 est préférentiellement de type monotube à gaz haute pression, la pression pouvant varier entre 12 bars et 25 bars. Toutefois, chaque amortisseur dédié 3 peut être de type bitube.

### Suspension arrière obtenue

L'invention a également pour objet une suspension d'un train arrière 1 d'un véhicule de type ambulance ou de type transport de personnes à mobilité réduite, obtenue par un procédé conforme à l'invention.

La suspension comporte une phase statique (i.e. véhicule à l'arrêt) où la charge du véhicule est maintenue grâce aux ressorts dédiés 2, pouvant être à lame(s) ou hélicoïdaux. La courbe de hauteur du véhicule en fonction de la charge est définie par la raideur de la lame des ressorts dédiés 2 et par la flèche F (à vide) des ressorts dédiés 2. La flèche F des ressorts dédiés 2 donne l'ordonnée à l'origine de ladite courbe de hauteur tandis que la raideur des ressorts dédiés 2 donne la pente de ladite courbe. Selon la masse du train arrière 1 du véhicule en charge, la hauteur du véhicule en charge correspond au point dit « zéro » de la suspension, et permet de définir l'assiette du véhicule.

La suspension comporte une phase dynamique (i.e. véhicule en situation de roulage) où les irrégularités et les défauts de la route sont absorbés par la flexibilité des ressorts dédiés 2. Les ressorts dédiés 2 se compriment et se détendent autour du point zéro de la suspension, et ce afin de donner un débattement aux roues arrières et par là-même absorber les défauts. Durant la phase dynamique, les amortisseurs dédiés 3 permettent de freiner le mouvement des ressorts dédiés 2 afin d'éviter des oscillations. Les amortisseurs dédiés 3 permettent de définir la tenue de route, le dynamisme du véhicule et le confort ressenti par les passagers du véhicule.

La course des amortisseurs dédiés 3 est délimitée par un point haut correspondant au point de compression maximum, et par un point bas correspondant au point de détente maximum. Le point haut est préférentiellement défini par un élément fixe pouvant être une butée de chocs 4. Le point bas est défini par la flèche F (à vide) des ressorts dédiés 2. On parle de débattement disponible en compression, correspondant à la distance entre le point haut et le point zéro. On parle de débattement disponible en détente, correspondant à la distance entre le point zéro et le point bas. Pour l'optimisation d'une suspension d'un train arrière 1 d'un véhicule de type ambulance ou de type transport de personnes à mobilité réduite (TPMR), on recherche à maximiser la course des amortisseurs dédiés 3 afin d'accroître le débattement de la suspension et d'améliorer la filtration des défauts. Les tarages haute vitesse et basse vitesse effectués lors de l'étape b) permettent de modifier la force d'amortissement des amortisseurs dédiés 3 selon la nature des défauts routiers. Les tarages haute vitesse et basse vitesse effectués lors de l'étape b) visent à trouver un compromis entre confort, tenue de route et dynamisme du véhicule.

La force nécessaire pour comprimer les ressorts dédiés 2 est directement liée à leur raideur. Plus la raideur est importante, plus il faudra de force pour comprimer le ressort dédié 2, et plus le choc retranscrit aux passagers sera important. La raideur des ressorts dédiés 2 est strictement inférieure à la raideur d'origine afin de réduire la force nécessaire pour comprimer les ressorts dédiés 2, et par là-même améliorer la filtration des défauts de la route.

Comme illustré à la figure 5, la suspension obtenue par un procédé selon l'invention permet de limiter les accélérations subis par les passagers approximativement sous la valeur de 2g, alors que la suspension d'origine peut atteindre 3g voire 4g où les chocs sont potentiellement rudes et peuvent occasionner un mal de dos.

## Revendications

1. Procédé d'optimisation d'une suspension d'un train arrière (1) d'un véhicule de type ambulance ou de type transport de personnes à mobilité réduite, la suspension comprenant :
- deux ressorts d'origine, possédant chacun une raideur d'origine et une flèche d'origine ;
- deux amortisseurs d'origine, possédant chacun :
une force de détente d'origine à basse vitesse, pour une vitesse de débattement de l'amortisseur d'origine inférieure à 0,1 m.s⁻¹,
une force de compression d'origine à basse vitesse, pour une vitesse de débattement de l'amortisseur d'origine inférieure à 0,1 m.s⁻¹,
**caractérisé par** le procédé comportant les étapes :
a) remplacer les deux ressorts d'origine par deux ressorts dédiés (2), possédant chacun une raideur strictement inférieure à la raideur d'origine et une flèche (F) strictement supérieure à la flèche d'origine ;
b) remplacer les deux amortisseurs d'origine par deux amortisseurs dédiés (3), possédant chacun :
- une force de détente à basse vitesse, pour une vitesse de débattement de l'amortisseur dédié (3) inférieure à 0,1 m.s⁻¹,strictement inférieure à la force de détente d'origine à basse vitesse ;
- une force de compression à basse vitesse, pour une vitesse de débattement de l'amortisseur dédié (3) inférieure à 0,1 m.s⁻¹, strictement supérieure à la force de compression d'origine à basse vitesse.

2. Procédé selon la revendication 1, dans lequel chaque amortisseur d'origine possède :
- une force de détente d'origine à haute vitesse, pour une vitesse de débattement de l'amortisseur d'origine supérieure à 0,4 m.s⁻¹;
- une force de compression d'origine à haute vitesse, pour une vitesse de débattement de l'amortisseur d'origine supérieure à 0,4 m.s⁻¹;
et l'étape b) est exécutée de sorte que chaque amortisseur dédié (3) possède :
- une force de détente à haute vitesse, pour une vitesse de débattement de l'amortisseur dédié (3) supérieure à 0,4 m.s⁻¹, strictement inférieure à la force de détente d'origine à haute vitesse ;
- une force de compression à haute vitesse, pour une vitesse de débattement de l'amortisseur dédié (3) supérieure à 0,4 m.s⁻¹, strictement supérieure à la force de compression d'origine à haute vitesse.

3. Procédé selon la revendication 2, dans lequel l'étape b) est exécutée de sorte que :
- la force de détente à haute vitesse de chaque amortisseur dédié (3) est comprise entre 40% et 60%, de préférence comprise entre 45% et 55%, de la force de détente d'origine à haute vitesse ;
- la force de compression à haute vitesse de chaque amortisseur dédié (3) est comprise entre 180% et 220%, de préférence comprise entre 190% et 210%, de la force de compression d'origine à haute vitesse.

4. Procédé selon la revendication 2 ou 3, dans lequel la force de détente d'origine à haute vitesse est comprise entre 1300 N et 1400 N, la force de compression d'origine à haute vitesse est comprise entre 140 N et 160 N ; et l'étape b) est exécutée de sorte que :
- la force de détente à haute vitesse de chaque amortisseur dédié (3) est comprise entre 520 N et 840 N, de préférence comprise entre 585 N et 770 N ;
- la force de compression à haute vitesse de chaque amortisseur dédié (3) est comprise entre 252 N et 352 N, de préférence comprise entre 266 N et 336 N.

5. Procédé selon l'une des revendications 1 à 4, dans lequel l'étape b) est exécutée de sorte que :
- la force de détente à basse vitesse de chaque amortisseur dédié (3) est comprise entre 20% et 40%, de préférence comprise entre 25% et 35%, de la force de détente d'origine à basse vitesse ;
- la force de compression à basse vitesse de chaque amortisseur dédié (3) est comprise entre 120% et 160%, de préférence comprise entre 130% et 150%, de la force de compression d'origine à basse vitesse.

6. Procédé selon l'une des revendications 1 à 5, dans lequel la force de détente d'origine à basse vitesse est comprise entre 900 N et 1100 N, la force de compression d'origine à basse vitesse est comprise entre 90 N et 110 N ; et l'étape b) est exécutée de sorte que :
- la force de détente à basse vitesse de chaque amortisseur dédié (3) est comprise entre 180 N et 440 N, de préférence comprise entre 225 N et 385 N ;
- la force de compression à basse vitesse de chaque amortisseur dédié (3) est comprise entre 108 N et 176 N, de préférence comprise entre 117 N et 165 N.

7. Procédé selon l'une des revendications 1 à 6, dans lequel l'étape a) est exécutée de sorte que la raideur de chaque ressort dédié (2) est comprise entre 60% et 80% de la raideur d'origine.

8. Procédé selon l'une des revendications 1 à 7, dans lequel la raideur d'origine est comprise entre 90 N/m et 100 N/m, et l'étape a) est exécutée de sorte que la raideur de chaque ressort dédié (2) est comprise entre 54 N/m et 80 N/m, de préférence comprise entre 63 N/m et 70 N/m.

9. Procédé selon l'une des revendications 1 à 8, dans lequel l'étape a) est exécutée de sorte que la flèche (F) de chaque ressort dédié (2) est comprise entre 106% et 147% de la flèche d'origine.

10. Procédé selon l'une des revendications 1 à 9, dans lequel le véhicule possède une masse en charge maximale d'utilisation mesurée sous les roues du train arrière (1) comprise entre 1300 kg et 1500 kg, la flèche d'origine est comprise entre 150 mm et 160 mm, et l'étape a) est exécutée de sorte que la flèche (F) de chaque ressort dédié (2) est comprise entre 170 mm et 190 mm.

11. Procédé selon l'une des revendications 1 à 9, dans lequel le véhicule possède une masse en charge maximale d'utilisation mesurée sous les roues du train arrière (1) comprise entre 1700 kg et 1800 kg, la flèche d'origine est comprise entre 150 mm et 160 mm, et l'étape a) est exécutée de sorte que la flèche (F) de chaque ressort dédié (2) est comprise entre 190 mm et 210 mm.

12. Procédé selon l'une des revendications 1 à 9, dans lequel le véhicule possède une masse en charge maximale d'utilisation mesurée sous les roues du train arrière (1) comprise entre 1800 kg et 2100 kg, la flèche d'origine est comprise entre 150 mm et 160 mm, et l'étape a) est exécutée de sorte que la flèche (F) de chaque ressort dédié (2) est comprise entre 200 mm et 220 mm.

13. Procédé selon l'une des revendications 1 à 12, dans lequel chaque ressort d'origine est de type monolame, et l'étape a) est exécutée de sorte que chaque ressort dédié (2) est de type bilame.

14. Procédé selon l'une des revendications 1 à 13, dans lequel chaque amortisseur d'origine est de type bitube, et l'étape b) est exécutée de sorte que chaque amortisseur dédié (3) est de type monotube à gaz.

15. Procédé selon l'une des revendications 1 à 14, dans lequel la flèche (F) des ressorts dédiés (2) définit un point haut et un point bas de la suspension du train arrière (1) du véhicule ; et l'étape b) est exécutée de sorte que chaque amortisseur dédié (3) possède un entraxe ouvert (EO), adapté à la flèche (F) des ressorts dédiés (2), de sorte que l'amortisseur dédié (3) peut se comprimer librement au point haut et peut se détendre librement au point bas.

## Patentansprüche

1. Verfahren zur Optimierung einer Aufhängung einer Hinterachse (1) eines Fahrzeugs des Typs Krankenwagen oder des Typs Transportfahrzeug für Personen mit eingeschränkter Mobilität, wobei die Aufhängung Folgendes umfasst:
- zwei Ursprungsfedern, die jeweils eine Ursprungssteifigkeit und eine Ursprungsdurchbiegung aufweisen;
- zwei Ursprungsstoßdämpfer, die jeweils Folgendes aufweisen:
eine Ursprungszugkraft bei geringer Geschwindigkeit für eine Ausfedergeschwindigkeit des Ursprungsstoßdämpfers von weniger als 0,1 m.s⁻¹,
eine Ursprungsdruckkraft bei geringer Geschwindigkeit für eine Ausfedergeschwindigkeit des Ursprungsstoßdämpfers von weniger als 0,1 m.s⁻¹,
**dadurch gekennzeichnet, dass** das Verfahren die folgenden Schritte aufweist:
a) Ersetzen der beiden Ursprungsfedern durch zwei Spezialfedern (2), die jeweils eine Steifigkeit aufweisen, die strikt unter der Ursprungssteifigkeit liegt, und eine Durchbiegung (F), die strikt über der Ursprungsdurchbiegung liegt;
b) Ersetzen der beiden Ursprungsstoßdämpfer durch zwei Spezialstoßdämpfer (3), die jeweils Folgendes aufweisen:
- eine Zugkraft bei geringer Geschwindigkeit, für eine Ausfedergeschwindigkeit des Spezialstoßdämpfers (3) von weniger als 0,1 m.s⁻¹, die strikt unter der Ursprungszugkraft bei geringer Geschwindigkeit liegt;
- eine Druckkraft bei geringer Geschwindigkeit, für eine Ausfedergeschwindigkeit des Spezialstoßdämpfers (3) von weniger als 0,1 m.s⁻¹, die strikt über der Ursprungsdruckkraft bei geringer Geschwindigkeit liegt.

2. Verfahren nach Anspruch 1, wobei jeder Ursprungsstoßdämpfer Folgendes aufweist:
- eine Ursprungszugkraft bei hoher Geschwindigkeit für eine Ausfedergeschwindigkeit des Ursprungsstoßdämpfers von mehr als 0,4 m.s⁻¹;
- eine Ursprungsdruckkraft bei hoher Geschwindigkeit für eine Ausfedergeschwindigkeit des Ursprungsstoßdämpfers von mehr als 0,4 m.s⁻¹;
und wobei der Schritt b) so ausgeführt wird, dass jeder Spezialstoßdämpfer (3) Folgendes aufweist:
- eine Zugkraft bei hoher Geschwindigkeit für eine Ausfedergeschwindigkeit des Spezialstoßdämpfers (3) von mehr als 0,4 m.s⁻¹, die strikt unter der Ursprungszugkraft bei hoher Geschwindigkeit liegt;
- eine Druckkraft bei hoher Geschwindigkeit für eine Ausfedergeschwindigkeit des Spezialstoßdämpfers (3) von mehr als 0,4 m.s⁻¹, die strikt über der Ursprungsdruckkraft bei hoher Geschwindigkeit liegt.

3. Verfahren nach Anspruch 2, wobei der Schritt b) so ausgeführt wird, dass:
- die Zugkraft bei hoher Geschwindigkeit jedes Spezialstoßdämpfers (3) zwischen 40 % und 60 %, vorzugsweise zwischen 45 % und 55 %, der Ursprungszugkraft bei hoher Geschwindigkeit liegt;
- die Druckkraft bei hoher Geschwindigkeit jedes Spezialstoßdämpfers (3) zwischen 180 % und 220 %, vorzugsweise zwischen 190 % und 210 %, der Ursprungsdruckkraft bei hoher Geschwindigkeit liegt.

4. Verfahren nach Anspruch 2 oder 3, wobei die Ursprungszugkraft bei hoher Geschwindigkeit zwischen 1.300 N und 1.400 N liegt, die Ursprungsdruckkraft bei hoher Geschwindigkeit zwischen 140 N und 160 N liegt und der Schritt b) so ausgeführt wird, dass:
- die Zugkraft bei hoher Geschwindigkeit jedes Spezialstoßdämpfers (3) zwischen 520 N und 840 N, vorzugsweise zwischen 585 N und 770 N, liegt;
- die Druckkraft bei hoher Geschwindigkeit jedes Spezialstoßdämpfers (3) zwischen 252 N und 352 N, vorzugsweise zwischen 266 N und 336 N, liegt.

5. Verfahren nach einem der Ansprüche 1 bis 4, wobei der Schritt b) so ausgeführt wird, dass:
- die Zugkraft bei geringer Geschwindigkeit jedes Spezialstoßdämpfers (3) zwischen 20 % und 40 %, vorzugsweise zwischen 25 % und 35 %, der Ursprungszugkraft bei geringer Geschwindigkeit liegt;
- die Druckkraft bei geringer Geschwindigkeit jedes Spezialstoßdämpfers (3) zwischen 120 % und 160 %, vorzugsweise zwischen 130 % und 150 %, der Ursprungsdruckkraft bei geringer Geschwindigkeit liegt.

6. Verfahren nach einem der Ansprüche 1 bis 5, wobei die Ursprungszugkraft bei geringer Geschwindigkeit zwischen 900 N und 1.100 N liegt, die Ursprungsdruckkraft bei geringer Geschwindigkeit zwischen 90 N und 110 N liegt und der Schritt b) so ausgeführt wird, dass:
- die Zugkraft bei geringer Geschwindigkeit jedes Spezialstoßdämpfers (3) zwischen 180 N und 440 N, vorzugsweise zwischen 225 N und 385 N, liegt;
- die Druckkraft bei geringer Geschwindigkeit jedes Spezialstoßdämpfers (3) zwischen 108 N und 176 N, vorzugsweise zwischen 117 N und 165 N, liegt.

7. Verfahren nach einem der Ansprüche 1 bis 6, wobei der Schritt a) so ausgeführt wird, dass die Steifigkeit jeder Spezialfeder (2) zwischen 60 % und 80 % der Ursprungssteifigkeit liegt.

8. Verfahren nach einem der Ansprüche 1 bis 7, wobei die Ursprungssteifigkeit zwischen 90 N/m und 100 N/m liegt und der Schritt a) so ausgeführt wird, dass die Steifigkeit jeder Spezialfeder (2) zwischen 54 N/m und 80 N/m, vorzugsweise zwischen 63 N/m und 70 N/m, liegt.

9. Verfahren nach einem der Ansprüche 1 bis 8, wobei der Schritt a) so ausgeführt wird, dass die Durchbiegung (F) jeder Spezialfeder (2) zwischen 106 % und 147 % der Ursprungsdurchbiegung liegt.

10. Verfahren nach einem der Ansprüche 1 bis 9, wobei das Fahrzeug eine unter den Rädern der Hinterachse (1) gemessene maximale Betriebslastmasse zwischen 1.300 kg und 1.500 kg aufweist, die Ursprungsdurchbiegung zwischen 150 mm und 160 mm liegt und der Schritt a) so ausgeführt wird, dass die Durchbiegung (F) jeder Spezialfeder (2) zwischen 170 mm und 190 mm liegt.

11. Verfahren nach einem der Ansprüche 1 bis 9, wobei das Fahrzeug eine unter den Rädern der Hinterachse (1) gemessene maximale Betriebslastmasse zwischen 1.700 kg und 1.800 kg aufweist, die Ursprungsdurchbiegung zwischen 150 mm und 160 mm liegt und der Schritt a) so ausgeführt wird, dass die Durchbiegung (F) jeder Spezialfeder (2) zwischen 190 mm und 210 mm liegt.

12. Verfahren nach einem der Ansprüche 1 bis 9, wobei das Fahrzeug eine unter den Rädern der Hinterachse (1) gemessene maximale Betriebslastmasse zwischen 1.800 kg und 2.100 kg aufweist, die Ursprungsdurchbiegung zwischen 150 mm und 160 mm liegt und der Schritt a) so ausgeführt wird, dass die Durchbiegung (F) jeder Spezialfeder (2) zwischen 200 mm und 220 mm liegt.

13. Verfahren nach einem der Ansprüche 1 bis 12, wobei jede Ursprungsfeder von einlagiger Art ist und der Schritt a) so ausgeführt wird, dass jede Spezialfeder (2) von zweilagiger Art ist.

14. Verfahren nach einem der Ansprüche 1 bis 13, wobei jeder Ursprungsstoßdämpfer von zweirohriger Art ist und der Schritt b) so ausgeführt wird, dass jeder Spezialstoßdämpfer (3) von der Art eines einrohrigen Gasstoßdämpfers ist.

15. Verfahren nach einem der Ansprüche 1 bis 14, wobei die Durchbiegung (F) der Spezialfedern (2) einen oberen Punkt und einen unteren Punkt der Aufhängung der Hinterachse (1) des Fahrzeugs definiert und wobei der Schritt b) so ausgeführt wird, dass jeder Spezialstoßdämpfer (3) einen offenen Achsabstand (EO) aufweist, der an die Durchbiegung (F) der Spezialfedern (2) angepasst ist, so dass sich der Spezialstoßdämpfer (3) am oberen Punkt frei einfedern und am unteren Punkt frei ausfedern kann.

## Claims

1. Method for optimizing a rear suspension (1) of a vehicle of ambulance type or transport for persons with reduced mobility type, the suspension comprising:
- two original springs, each having an original stiffness and an original sag;
- two original shock absorbers, each having:
an original expansion force at low speed, for a deflection speed of the original shock absorber that is less than 0.1 m.s⁻¹,
an original compressive force at low speed, for a deflection speed of the original shock absorber that is less than 0.1 m.s⁻¹,
**characterized by** the method having the following steps:
a) replacing the two original springs with two dedicated springs (2), each having a stiffness strictly less than the original stiffness and a sag (F) strictly greater than the original sag;
b) replacing the two original shock absorbers with two dedicated shock absorbers (3), each having:
- an expansion force at low speed, for a deflection speed of the dedicated shock absorber (3) that is less than 0.1 m.s⁻¹, strictly less than the original expansion force at low speed;
- a compressive force at low speed, for a deflection speed of the dedicated shock absorber (3) that is less than 0.1 m.s⁻¹, strictly greater than the original compressive force at low speed.

2. Method according to Claim 1, wherein each original shock absorber has:
- an original expansion force at high speed, for a deflection speed of the original shock absorber that is greater than 0.4 m.s⁻¹;
an original compressive force at high speed, for a deflection speed of the original shock absorber that is greater than 0.4 m.s⁻¹;
and step b) is carried out such that each dedicated shock absorber (3) has:
- an expansion force at high speed, for a deflection speed of the dedicated shock absorber (3) that is greater than 0.4 m.s⁻¹, strictly less than the original expansion force at high speed;
- a compressive force at high speed, for a deflection speed of the dedicated shock absorber (3) that is greater than 0.4 m.s⁻¹, strictly greater than the original compressive force at high speed.

3. Method according to Claim 2, wherein step b) is carried out such that:
- the expansion force at high speed of each dedicated shock absorber (3) is between 40% and 60%, preferably between 45% and 55%, of the original expansion force at high speed;
- the compressive force at high speed of each dedicated shock absorber (3) is between 180% and 220%, preferably between 190% and 210%, of the original compressive force at high speed.

4. Method according to Claim 2 or 3, wherein the original expansion force at high speed is between 1300 N and 1400 N, the original compressive force at high speed is between 140 N and 160 N; and step b) is carried out such that:
- the expansion force at high speed of each dedicated shock absorber (3) is between 520 N and 840 N, preferably between 585 N and 770 N;
- the compressive force at high speed of each dedicated shock absorber (3) is between 252 N and 352 N, preferably between 266 N and 336 N.

5. Method according to one of Claims 1 to 4, wherein step b) is carried out such that:
- the expansion force at low speed of each dedicated shock absorber (3) is between 20% and 40%, preferably between 25% and 35%, of the original expansion force at low speed;
- the compressive force at low speed of each dedicated shock absorber (3) is between 120% and 160%, preferably between 130% and 150%, of the original compressive force at low speed.

6. Method according to one of Claims 1 to 5, wherein the original expansion force at low speed is between 900 N and 1100 N, the original compressive force at low speed is between 90 N and 110 N; and step b) is carried out such that:
- the expansion force at low speed of each dedicated shock absorber (3) is between 180 N and 440 N, preferably between 225 N and 385 N;
- the compressive force at low speed of each dedicated shock absorber (3) is between 108 N and 176 N, preferably between 117 N and 165 N.

7. Method according to one of Claims 1 to 6, wherein step a) is carried out such that the stiffness of each dedicated spring (2) is between 60% and 80% of the original stiffness.

8. Method according to one of Claims 1 to 7, wherein the original stiffness is between 90 N/m and 100 N/m, and step a) is carried out such that the stiffness of each dedicated spring (2) is between 54 N/m and 80 N/m, preferably between 63 N/m and 70 N/m.

9. Method according to one of Claims 1 to 8, wherein step a) is carried out such that the sag (F) of each dedicated spring (2) is between 106% and 147% of the original sag.

10. Method according to one of Claims 1 to 9, wherein the vehicle has a maximum working laden mass measured under the wheels of the rear suspension (1) of between 1300 kg and 1500 kg, the original sag is between 150 mm and 160 mm, and step a) is carried out such that the sag (F) of each dedicated spring (2) is between 170 mm and 190 mm.

11. Method according to one of Claims 1 to 9, wherein the vehicle has a maximum working laden mass measured under the wheels of the rear suspension (1) of between 1700 kg and 1800 kg, the original sag is between 150 mm and 160 mm, and step a) is carried out such that the sag (F) of each dedicated spring (2) is between 190 mm and 210 mm.

12. Method according to one of Claims 1 to 9, wherein the vehicle has a maximum working laden mass measured under the wheels of the rear suspension (1) of between 1800 kg and 2100 kg, the original sag is between 150 mm and 160 mm, and step a) is carried out such that the sag (F) of each dedicated spring (2) is between 200 mm and 220 mm.

13. Method according to one of Claims 1 to 12, wherein each original spring is of single-leaf type, and step a) is carried out such that each dedicated spring (2) is of two-leaf type.

14. Method according to one of Claims 1 to 13, wherein each original shock absorber is of twin-tube type, and step b) is carried out such that each dedicated shock absorber (3) is of gas-operated monotube type.

15. Method according to one of Claims 1 to 14, wherein the sag (F) of the dedicated springs (2) defines a top point and a bottom point of the rear suspension (1) of the vehicle; and step b) is carried out such that each dedicated shock absorber (3) has an open centre distance (EO) adapted to the sag (F) of the dedicated springs (2), such that the dedicated shock absorber (3) can compress freely at the top point and can expand freely at the bottom point.
